# EUROPÄISCHE PATENTSCHRIFT

(11) **EP 3 556 224 B1**
(45) Veröffentlichungstag und Bekanntmachung des Hinweises auf die Patenterteilung: **05.08.2020**
(21) Anmeldenummer: 19169620.2
(22) Anmeldetag: 16.04.2019
(51) Int. Cl.: A23L 13/60, A23P 20/00, A23L 13/50, A23P 30/10, A23L 13/40, A23J 1/10

(54) **LEBERPASTETE UND VERFAHREN ZUR HERSTELLUNG**
LIVER PATE AND METHOD FOR MANUFACTURING THE SAME
PATE DE FOIE ET SON PROCÉDÉ DE FABRICATION

(30) Priorität: 20.04.2018 DE 102018206169
(43) Veröffentlichungstag der Anmeldung: 23.10.2019
(73) Patentinhaber: Deutsches Institut für Lebensmitteltechnik e.V., 49610 Quakenbrück (DE)
(72) Erfinder: Terjung, Nino, 49610 Quakenbrück (DE)
(74) Vertreter: Taruttis, Stefan Georg

(56) Entgegenhaltungen:
- EP-A2- 0 249 863
- CN-A- 101 933 605
- DE-A1-102006 060 831
- DE-U1-202016 006 652
- US-A- 3 743 514
- H. Jakob: "Leberwurst, Erklärungen zur Herstellung; C1a Wurstherstellung - Kochwurst", , 2005, Seiten 1-3, XP055620659, Gefunden im Internet: URL:https://www.oekolandbau.de/fileadmin/r edaktion/oeko_lehrmittel/Ernaehrungswirtsc haft/Fleischerhandwerk/fl_modul_c/fl_c_01/ flmc01_01.pdf [gefunden am 2019-09-10]

## Beschreibung

Die vorliegende Erfindung betrifft ein Verfahren zur Herstellung von Leberpastete, die geschmacklich und sensorisch mit klassischer, aus Gänsestopfleber hergestellter Gänseleberpastete hochgradig ähnlich ist. Das Verfahren und die damit hergestellte Leberpastete haben den Vorteil, keine Stopfleber einzusetzen bzw. zu enthalten, so dass nur tierschutzgerecht erzeugte Rohstoffe eingesetzt werden.

In einer bevorzugten Ausführungsform zeichnet sich das Verfahren bzw. die damit hergestellte Leberpastete dadurch aus, dass nur tierische Bestandteile, Salz, Nitritpökelsalz und Gewürz eingesetzt werden, bzw. die Leberpastete daraus besteht. Entsprechend werden im Verfahren bevorzugt keine Verdickungsmittel, keine Emulgatoren, keine Stabilisatoren, keine pflanzlichen Fette und/oder keine Geschmacksverstärker oder Aromastoffe zugegeben, und die Leberpastete ist frei von diesen.

Die DE 20 2016 006 652 U1 beschreibt eine Leberwurstrezeptur, die 20 % eines Füllstoffs enthält, der wiederum aus 30 % einer 5 % erbsenfaser Suspension und 70 % einer Gelantinemasse besteht, die aus gekochter Schweineschwarte mit Trinkwasser und Sonnenblumenöl besteht.

Die CN101933605 A beschreibt ausweislich der englischen Computerübersetzung (vom Europäischen Patentamt heruntergeladen) das Garen, anschließendes Zerkleinern und enzymatische Proteolyse, dann Mischen mit gelöstem Zucker und Milchpulver zur Fermentation mit Laktobazillen.

Die EP0249863 A2 beschreibt den Zusatz von Kollagenhydrolisat, dass aus tierischen Bindegewebe durch Druck, Säure- und Laugeneinwirkung oder durch Enzyme gewonnen wird in Leberstreichwurst, die neben 15 % Schweineleber 55 % gewachsener gebrühter Schweinebauch, 20 % gewachsenes gebrühtes Schweinefleisch und 10 % Kochbrühe neben Kochsalz, Gewürzmischung und 15 g/kg gedünsteter Zwiebeln enthält (Beispiel I).

Die US 3,743,514 A beschreibt für die Herstellung von Fleischerzeugnissen die Drüse von Kollagen durch säurefreie Dampfhydrolyse, um das Protein aus Kollagen in einen nicht gelierenden wasserlöslichen Zustand zu überführen (Anspruch 1).

H. Jakob "Leberwurst", Erklärungen zur Herstellung; C1a Wurstherstellung-Kochwurst, Bundesministerium für Verbraucherschutz, Ernährung und Landwirtschaft 2005 beschreibt die Herstellung von Leberwurst aus frischer, gekutterter Leberwurst, der Salz langsam untergekuttert wird, wobei das Leberwurstmaterial ohne Leber heiß gekuttert wird und anschließend bei 40-50°C die mit Salz vorgekutterte Leber zugegeben wird, mit anschließendem Füllen und Erwärmen auf 68°C Kerntemperatur.

Die DE 10 2006 060 831 A1 beschreibt ebenfalls zur Herstellung von Leberwurst das Kochen von Fleisch- und Fettanteil mit gleichzeitigem Zerkleinern und Mischen, anschließend Kühlen und Zugeben von Leber mit anschließendem Emulgieren der Masse.

Die CH 690 413 A5 beschreibt als Ersatz für Gänseleberpastete eine Mischung aus marinierter Entenleber mit Emulgator und Verdickungsmittel, die beide z.B. Eigelb sein können, und Fett, z.B. Butter, mit anschließendem Garen.

Die DE 24 53 729 A1 die Herstellung eines Lebensmittels aus 60 % ganzer, d.h. unzerkleinerter Geflügelleber, 20 % Geflügelfett und 20 % Eiern, Milch, Kognak und anderen Zutaten.

Es ist bekannt, Gänseleberpastete und/oder Entenleberpastete aus sogenannter Stopfleber von Gänsen oder Enten herzustellen, die sich durch einen extrem hohen Fettgehalt auszeichnet. Das Mästen von Gänsen durch Stopfen ist zumindest in Deutschland aus Gründen des Tierschutzes verboten. In Deutschland ist die Produktion von Gänsestopfleber nach § 3 Nr. 9 des TierSchG (Fassung von 2006) verboten, der Import jedoch noch geduldet.

Der Erfindung stellt sich die Aufgabe, ein Verfahren anzugeben, mit dem Leberpastete ohne Einsatz von Stopfleber, bzw. nur aus tierschutzgerecht erzeugten Rohstoffen, hergestellt werden kann.

Die Erfindung löst die Aufgabe mit den Merkmalen der Ansprüche und stellt insbesondere ein Verfahren bereit, mit dem ausschließlich aus tierischen Rohstoffen, die tierschutzgerecht, insbesondere ohne Zwangsernährung der Tiere erzeugt sind, Leberpastete herstellbar ist, die in Geschmack und Konsistenz hochwertig ist und bevorzugt in Geschmack und Struktur aus Gänsestopfleber hergestellter Gänseleberpastete ähnlich ist.

Das Verfahren zur Herstellung von Leberpastete umfasst die Schritte
a) Auskochen von kollagenhaltigem tierischen Gewebe in Wasser bis zum Auflösen der Struktur, Abtrennen fester Bestandteile zur Herstellung wässriger Gallerte und Konzentrieren der wässrigen Gallerte durch Abtrennen von Wasser bis zumindest zum Konzentrieren auf maximal ein Halb, z.B. auf maximal 40%, maximal 30%, maximal 20% oder maximal 10% des Gewichts des eingesetzten kollagenhaltigen Gewebes zur Herstellung konzentrierter wasserlöslicher Gallerte,
b) Zerkleinern von tierischem Fettgewebe, Aufschmelzen des Fetts und Abtrennen ungelöster Bestandteile zur Herstellung flüssigen Fetts,
c) Wässern tierischer roher Leber in kaltem Wasser, Passieren durch ein Sieb zum Abtrennen fester Bestandteile, optional zusätzliches Zerkleinern der passierten Bestandteile, zur Herstellung roher passierter Leber,
d) Homogenisieren von
   15-25 Gew.-% konzentrierter wässriger Gallerte,
   30-50 Gew.-% flüssigen Fetts,
   10-40 Gew.-% roher passierter Leber,
   Nitritpökelsalz und/oder Speisesalz und Gewürzen
   zur Herstellung einer Leberpastetenmasse,
   Abfüllen der Leberpastetenmasse, z.B. in geschlossene Behälter, bevorzugt mit Vakuum, und Garen,
   oder besteht daraus.

Das tierische Fettgewebe kann jedwedes Fettgewebe sein, z.B. Unterhautfett und/oder Flomen, und kann aus jedem zum Verzehr geeigneten Tier stammen, z.B. aus Schwein, weniger bevorzugt aus Rind, bevorzugt aus Geflügel, z.B. Pute, Huhn und/oder Perlhuhn, bevorzugter Ente und/oder Gans. Das Aufschmelzen des Fetts kann z.B. durch Erwärmen des Fettgewebes auf ca. 50°C erfolgen. Bevorzugt wird das Fett auf eine Temperatur erwärmt, bei der darin enthaltenes Protein denaturiert, z.B. auf 50°C für zumindest 30 min, oder z.B. für zumindest 1h, z.B. bis 2h oder bis 1,5h. Das Abtrennen ungelöster Bestandteile kann durch Sieben erfolgen und trennt bevorzugt auch denaturiertes Protein ab.

Kollagenhaltiges tierisches Gewebe ist z.B. Haut, Sehnen, Knochen, Knorpel und/oder Füße. Durch das Auskochen in Wasser, z.B. bei 80 bis 100°C, wird eine wässrige Gallerte hergestellt, die gelöste Gelatine enthält, und die anschließend durch Abrennen von Wasser auf maximal ein Halb (50%), z.B. bis auf ein Fünftel (20%) des Gewichts des eingesetzten tierischen kollagenhaltigen Gewebes konzentriert wird. Das Abtrennen von Wasser erfolgt z.B. durch Abdampfen von Wasser, optional unter Vakuum, oder mittels Membrantrennverfahren. Das kollagenhaltige tierische Gewebe kann aus jedem zum Verzehr geeigneten Tier stammen, z.B. aus Schwein oder Rind, bevorzugt aus Geflügel, z.B. Pute, Huhn und/oder Perlhuhn, bevorzugter Ente und/oder Gans.

Die Leber kann aus jedem zum Verzehr geeigneten Tier stammen, z.B. aus Schwein oder Rind, bevorzugt aus Geflügel, z.B. Pute, Huhn und/oder Perlhuhn, bevorzugter Ente und/oder Gans. Vor dem Zerkleinern wird die Leber bevorzugt für mindestens 2 h in fließendem kalten Wasser gewässert. Das Passieren der Leber erfolgt bevorzugt durch ein Sieb mit Öffnungen von maximal 1 mm, z.B. von maximal 0,5 mm, um z.B. Gallengänge als feste Bestandteile zu entfernen. Optional kann die passierte Leber weiter zerkleinert werden, z.B. durch Kuttern oder ähnliche schneidende Verfahren.

Bevorzugt stammen alle tierischen Bestandteile aus Ente und/oder aus Gans.

Das Nitritpökelsalz wird der Leber bevorzugt vor oder nach dem Passieren zugesetzt und die Leber wird anschließend umröten gelassen, z.B. durch Lagern bei maximal 5°C, z.B. bei 2°C, für mindestens 12h, z.B. für bis zu 24h.

Bevorzugt wird zunächst die konzentrierte wässrige Gallerte mit dem flüssigen Fett bis zur Homogenität homogenisiert, insbesondere bis zu einer Viskositätserhöhung, z.B. bis 30.000 mPa·s, gemessen mit einem Rotationsviskosimeter bei der Temperatur der Mischung, und diese Mischung wird anschließend mit der rohen passierten Leber gemischt. Dabei wird weiter bevorzugt die konzentrierte Gallerte in einem Mischbehälter vorgelegt und unter Rühren das flüssige Fett nach und nach zugegeben. Alternativ kann die rohe passierte Leber zunächst mit dem flüssigen Fett bis zur Homogenität gemischt werden und anschließend die konzentrierte wässrige Gallerte zugemischt werden.

Optional können das flüssige Fett und die konzentrierte wässrige Gallerte vor dem Mischen auf dieselbe Temperatur temperiert werden, z.B. auf zumindest 30°C, z.B. auf bis zu 100°C.

Gewürze und optional Speisesalz zusätzlich zum Nitritpökelsalz können in jedem Schritt zugemischt werden, z.B. beim Mischen des flüssigen Fetts, der konzentrierten wässrigen Gallerte und/oder der rohen passierten Leber zugegeben werden.

In Schritt d) kann das Homogenisieren ein Mischen sein, das bevorzugt bis zur Herstellung einer homogenen Masse durchgeführt wird. Das Mischen kann mit einem Mischer, z.B. einem Mischer, der ein hochtouriger Mischer sein kann, bzw. mit einem Homogenisator erfolgen, der z.B. ein Rotor-Stator-Homogenisator, Kutter oder eine Kolloidmühle ist.

Das Garen kann bei 70 bis 120°C erfolgen, z.B. bis zum Erreichen einer Kerntemperatur von zumindest 58°C, z.B. bis 120°C, z.B. für zumindest 10 min.

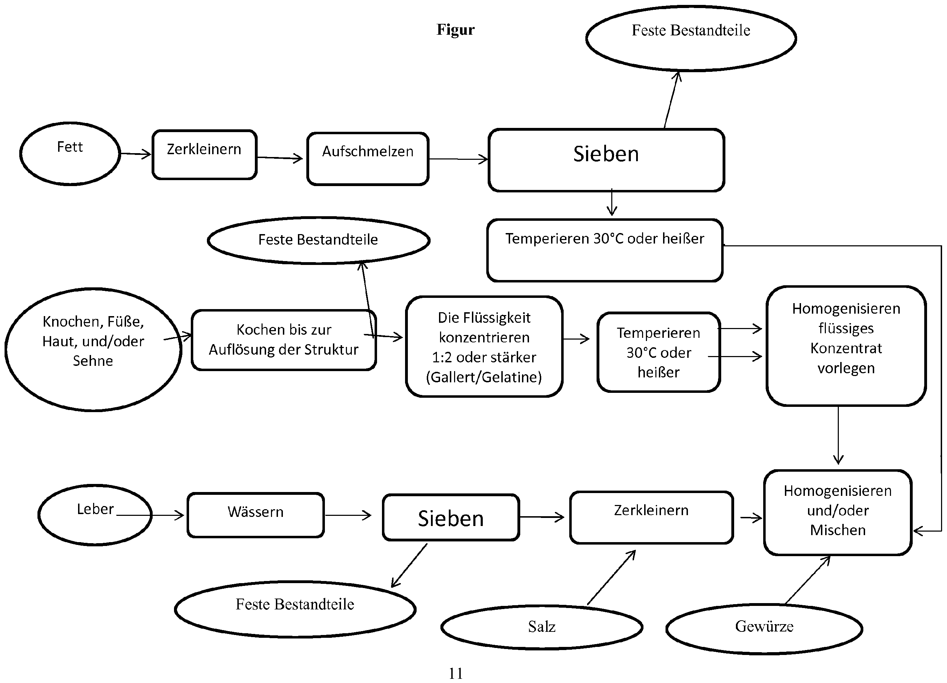

Die Erfindung wird nun genauer mit Bezug auf die Figur und anhand eines Beispiels beschrieben. Die Figur zeigt schematisch das Verfahren, bei dem das tierische Fettgewebe (Fett) zerkleinert und aufgeschmolzen wird und zur Entfernung fester Bestandteile gesiebt wird. Wie bevorzugt, wird das flüssige Fett vor dem Mischen auf zumindest 30°C erwärmt.

Als kollagenhaltiges tierisches Gewebe werden Knochen, Füße, Haut, Sehnen oder eine Mischung aus zumindest zweien dieser (Knochen/Füße/Haut/Sehnen) bis zur Strukturauflösung in Wasser gekocht und davon werden feste Bestandteile abgetrennt, um eine wässrige Gallerte zu erhalten, die anschließend zu einer konzentrierten Gallerte, die wasserlöslich bzw. wässrig ist, bis auf maximal 50 Gew.-%, z.B. auf 10 Gew.-% der Masse eingesetzten kollagenhaltigen tierischen Gewebes konzentriert wird. Die erhaltene Gallerte enthält gelöste Gelatine (in der Figur als Gallert/Gelatine bezeichnet). Das Konzentrieren kann z.B. durch Abdampfen von Wasser, optional unter Vakuum, erfolgen. Wie bevorzugt, kann die konzentrierte Gallerte vor dem Mischen auf zumindest 30°C temperiert werden.

Die Leber wird zunächst in fließendem kalten Wasser, z.B. bei 2 bis 8°C, gewässert, um Gallenflüssigkeit, Fleischsaft und ähnliche Flüssigkeiten zu entfernen, anschließend durch Sieben passiert und zerkleinert, wobei feste Bestandteile abgetrennt werden, z.B. durch Passieren durch ein Lochblech mit Öffnungen von 0,5 mm Durchmesser. Wie bevorzugt wird der passierten rohen Leber Nitritpökelsalz (in der Figur als Salz bezeichnet), optional zusätzlich Speisesalz, zugemischt und die passierte rohe Leber wird umröten gelassen.

Das flüssige Fett, die konzentrierte Gallerte, jeweils bevorzugt separat temperiert, werden mit der passierten Leber, bevorzugt umgerötet, mit Gewürzen gemischt, bevorzugt bis zur Homogenität gemischt (Homogenisieren/Mischen).

Weiter betrifft die Erfindung die mit dem Verfahren herstellbare Leberpastete, die sich dadurch auszeichnet, dass sie ausschließlich aus tierschutzgerecht erzeugten Rohstoffen besteht, keine Verdickungsmittel, keine Emulgatoren, keine Stabilisatoren, keine pflanzlichen Fette, keine Phosphate, und keine Geschmacksverstärker und keine synthetischen Aromastoffe enthält. Die erfindungsgemäße Leberpastete besteht aus 15-25 Gew.-% konzentrierter wässriger Gallerte, 30-50 Gew.-% Fett, 10-40 Gew.-% roher passierter Leber, Nitritpökelsalz und/oder Speisesalz und Gewürzen und ist eine homogene Masse, bevorzugt anschließend gegart. Als Gewürze können Portwein, z.B. zu 0,1 bis 2 Gew.-%, Zucker, z.B. zu 2 bis 4 Gew.-%, Pfeffer, z.B. zu 10 bis 20 g/kg, optional Antioxidationsmittel, z.B. Na-Ascorbat, z.B. zu 1 bis 2 g/kg enthalten sein, jeweils in Bezug auf die Gesamtmasse aus wässriger Gallerte, Fett und roher passierter Leber berechnet. Die mit dem Verfahren erhältliche Leberpastete besteht aus 15-25 Gew.-% konzentrierter wässriger Gallerte, 30-50 Gew.-% Fett, 10-40 Gew.-% roher passierter Leber, die ausschließlich aus tierschutzgerecht erzeugten Rohstoffen stammen, Nitritpökelsalz und/oder Speisesalz und Gewürzen und ist eine homogene Masse.

Generell betrifft die Erfindung ein Verfahren zur Herstellung von Leberpastete aus ausschließlich tierschutzgerecht erzeugten Rohstoffen.

### Beispiel: Herstellen von Leberpastete

Als kollagenhaltiges Gewebe wurden 10 kg Hälse von frisch geschlachteten Enten für ca. 12h in Wasser ausgekocht, so dass sich deren Struktur auflöste. Die wässrige Phase wurde durch Sieben abgetrennt und auf 5 kg, entsprechend ein Halb der Einwaage, eingekocht. Fett wird entfernt.
Als tierisches Fettgewebe wurden 12,5 kg Entenflomen zerkleinert, bis zur Verflüssigung erwärmt und durch ein Sieb mit 0,5mm Maschen gesiebt, um Feststoffe zu entfernen.

7,5 kg Entenleber wurden ca. 2h in fließendem Leitungswasser, ca. 2°C, gewässert. Mittels einer Passiermaschine mit Maschen von 0,5mm wurden feste Bestandteile, z.B. Gallengänge, entfernt. Die Rohstoffe stammten von Enten, die ohne Zwangsernährung aufgezogen waren.

Von der angestrebten Gesamtmasse der Leberpastete wurden 20 Gew.-% konzentrierte Gallerte in einem Rührbehälter vorgelegt und 50 Gew.-% Fett nach und nach durch langsames Einlaufenlassen über ca. 20 min unter Rühren homogenisiert. Diese Mischung wurde auf ca. 50 °C temperiert und optional homogenisiert, z.B. durch einen Rotor-Stator Homogenisator, Kutter oder durch eine Kolloidmühle. Dieser Mischung wurden als Gewürze 1 Gew.- % Nitritpökelsalz, 0,1 bis 2 Gew.-% Portwein, 2 bis 4 Gew.-% Zucker, 20 g/kg Pfeffer, 1 bis 2 g/kg Natriumascorbat als Antioxidationsmittel, jeweils auf die Gesamtmasse aus konzentrierter Gallerte, passierter Leber und Fett bezogen, hinzugegeben und durch Rühren eingemischt.

Passierte Leber wurde zu 30 Gew.-% an der angestrebten Gesamtmasse in einem Rührbehälter vorgelegt und unter Rühren wurde die Mischung aus konzentrierter Gallerte, Fett, Gewürzen und Nitritpökelsalz nach und nach über ca. 5 min zugegeben und weiter bis zur Homogenität gemischt. Die so hergestellte Leberpastetenmasse wurde unter Vakuum zu je 100 g in Behälter gefüllt, verschlossen und bei 80 °C für 60 min gegart. Das Verfahren wurde mit Hälsen, Fettgewebe und Leber von Gänsen, die ohne Zwangsernährung aufgezogen waren, wiederholt.

Die sensorische Prüfung ergab, dass von ungeschulten Testpersonen keine Unterschiede zu Leberpastete, die aus Stopfleber von Enten oder Gänsen hergestellt wurde, gefunden werden konnten.

## Patentansprüche

1. Verfahren zur Herstellung von Leberpastete, wobei keine Stopfleber eingesetzt wird, mit den Schritten
a) Auskochen von kollagenhaltigem tierischen Gewebe in Wasser bis zum Auflösen der Struktur, Abtrennen fester Bestandteile zur Herstellung wässriger Gallerte und Konzentrieren der wässrigen Gallerte durch Abtrennen von Wasser bis auf maximal 50 Gew.-% des Gewichts des eingesetzten kollagenhaltigen Gewebes zur Herstellung konzentrierter Gallerte,
b) Zerkleinern von tierischem Fettgewebe, Aufschmelzen des Fetts und Abtrennen ungelöster Bestandteile zur Herstellung flüssigen Fetts,
c) Wässern tierischer roher Leber in kaltem Wasser, Zerkleinern und Passieren durch ein Sieb zum Abtrennen fester Bestandteile zur Herstellung roher passierter Leber,
d) Mischen von
15-25 Gew.-% konzentrierter Gallerte,
30-50 Gew.-% flüssigen Fetts,
10-40 Gew.-% roher passierter Leber,
Nitritpökelsalz und/oder Speisesalz und Gewürzen
zur Herstellung einer Leberpastetenmasse,
Abfüllen der Leberpastetenmasse und Garen.

2. Verfahren nach Anspruch 1, **dadurch gekennzeichnet, dass** das kollagenhaltige tierische Gewebe Haut, Sehnen, Knochen, Knorpel und/oder Füße ist.

3. Verfahren nach einem der voranstehenden Ansprüche, **dadurch gekennzeichnet, dass** der passierten Leber Nitritpökelsalz zugesetzt wird.

4. Verfahren nach einem der voranstehenden Ansprüche, **dadurch gekennzeichnet, dass** das Zerkleinern und Passieren der Leber durch ein Sieb mit Öffnungen von maximal 1 mm erfolgt.

5. Verfahren nach einem der voranstehenden Ansprüche, **dadurch gekennzeichnet, dass** die passierte Leber nach Zusatz von Nitritpökelsalz bei max. 5 °C für mindestens 12 h umröten gelassen wird.

6. Verfahren nach einem der voranstehenden Ansprüche, **dadurch gekennzeichnet, dass** die Leber vor dem Zerkleinern mindestens 2 h in fließendem kalten Wasser gewässert wird.

7. Verfahren nach einem der voranstehenden Ansprüche, **dadurch gekennzeichnet, dass** das aufgeschmolzene tierische Fett zum Abtrennen ungelöster Bestandteile durch ein Sieb mit maximal 1 mm großen Maschen gesiebt wird.

8. Verfahren nach einem der voranstehenden Ansprüche, **dadurch gekennzeichnet, dass** das aufgeschmolzene tierische Fett auf eine Temperatur, bei der enthaltenes Protein denaturiert, erwärmt wird, und denaturiertes Protein mit den ungelösten Bestandteilen abgetrennt wird.

9. Verfahren nach einem der voranstehenden Ansprüche, **dadurch gekennzeichnet, dass** die tierische Leber Geflügelleber ist.

10. Verfahren nach einem der voranstehenden Ansprüche, **dadurch gekennzeichnet, dass** zunächst die konzentrierte Gallerte mit dem flüssigen Fett homogenisiert wird und diese Mischung anschließend mit der rohen passierten Leber gemischt wird.

11. Verfahren nach einem der voranstehenden Ansprüche, **dadurch gekennzeichnet, dass** das tierische Fettgewebe Unterhautfett, Flomen oder eine Mischung dieser ist.

12. Verfahren nach einem der voranstehenden Ansprüche, **dadurch gekennzeichnet, dass** das tierische Fettgewebe, das kollagenhaltige Gewebe und die Leber ausschließlich von Geflügel stammt.

13. Verfahren nach einem der voranstehenden Ansprüche, **dadurch gekennzeichnet, dass** das Garen bis zum Erreichen einer Kerntemperatur von zumindest 58°C für zumindest 10 min erfolgt.

14. Verfahren nach einem der voranstehenden Ansprüche, **dadurch gekennzeichnet, dass** keine Verdickungsmittel, keine Emulgatoren, keine Stabilisatoren, keine pflanzlichen Fette und/oder keine Geschmacksverstärker oder Aromastoffe oder Phosphate zugesetzt werden.

15. Leberpastete, die keine Stopfleber enthält und die nach einem Verfahren gemäß einem der voranstehenden Ansprüche erhältlich ist, die aus 15-25 Gew.-% konzentrierter wässriger Gallerte, 30-50 Gew.-% Fett, 10-40 Gew.-% roher passierter Leber, Nitritpökelsalz und/oder Speisesalz und Gewürzen besteht, keine Verdickungsmittel, keine Emulgatoren, keine Stabilisatoren, keine pflanzlichen Fette, keine Phosphate, keine Geschmacksverstärker und keine synthetischen Aromastoffe enthält und eine homogene Masse ist.

16. Leberpastete nach Anspruch 15, **dadurch gekennzeichnet, dass** die homogene Masse gegart ist.

## Claims

1. Process for the production of liver pate, wherein no foie gras is used, with the steps of
a) boiling collagen-containing animal tissue in water until dissolution the structure, separating solid constituents to produce aqueous jelly and concentrating the aqueous jelly by separating water to a maximum of 50 wt.-% of the weight of the collagen-containing tissue used to produce concentrated jelly,
b) mincing animal fat tissue, melting the fat and separating undissolved constituents to produce liquid fat,
c) soaking raw animal liver in cold water, mincing and straining through a sieve to separate solid ingredients for the preparation of raw strained liver,
d) mixing of
15-25 wt.-% concentrated jelly,
30-50 wt.-% liquid fat,
10-40 wt.-% raw strained liver,
nitrite curing salt and/or table salt and spices
for producing a liver pate mass,
filling of the liver pate mass and cooking.

2. Process according to claim 1, **characterized in that** the collagen-containing animal tissue is skin, tendons, bones, cartilage and/or feet.

3. Process according to one of the preceding claims, **characterized in that** nitrite curing salt is added to the strained liver.

4. Process according to one of the preceding claims, **characterized in that** the mincing and straining of the liver takes place through a sieve with openings of at maximum 1 mm.

5. Process according to one of the preceding claims, **characterized in that** the strained liver after the addition of nitrite curing salt is left to redden at maximally 5 °C for at least 12 h.

6. Process according to one of the preceding claims, **characterized in that** the liver is soaked in running cold water for at least 2 hours before the mincing.

7. Process according to one of the preceding claims, **characterized in that** the melted animal fat is sifted through a sieve with a maximum 1 mm mesh size to separate undissolved constituents.

8. Process according to one of the preceding claims, **characterized in that** the melted animal fat is heated to a temperature at which the contained protein is denatured, and denatured protein is separated off with the undissolved constituents.

9. Process according to one of the preceding claims, **characterized in that** the animal liver is poultry liver.

10. Process according to one of the preceding claims, **characterized in that** firstly the concentrated jelly is homogenized with the liquid fat and this mixture is subsequently mixed with the raw strained liver.

11. Process according to one of the preceding claims, **characterized in that** the animal fat tissue is subcutaneous fat, flare fat or a mixture of these.

12. Process according to one of the preceding claims, **characterized in that** the animal fat tissue, the collagen-containing tissue and the liver originate exclusively from poultry.

13. Process according to one of the preceding claims, **characterized in that** the cooking takes place until a core temperature of at least 58 °C is reached for at least 10 min.

14. Process according to one of the preceding claims, **characterized in that** no thickeners, no emulsifiers, no stabilizers, no vegetable fats and/or no flavour enhancers or flavourings or phosphates are added.

15. Liver pate not containing foie gras and obtainable by a process according to one of the preceding claims, consisting of 15-25 wt.-% concentrated aqueous jelly, 30-50 wt.-% fat, 10-40 wt.-% raw strained liver, nitrite curing salt and/or table salt and spices, containing no thickeners, no emulsifiers, no stabilizers, no vegetable fats, no phosphates and no flavour enhancers an no flavourings, and is a homogeneous mass.

16. Liver pate according to claim 15, **characterized in that** the homogeneous mass is cooked.

## Revendications

1. Procédé de production de pâté de foie, dans lequel aucun foie gras n'est utilisé, avec les étapes
a) faire bouillir du tissu animal contenant du collagène dans de l'eau jusqu'à la désintégration de la structure, séparer les composants solides pour produire de la gélatine aqueuse et concentrer la gélatine aqueuse par la séparation d'eau jusque 50 % en poids au maximum du poids du tissu contenant du collagène utilisé pour produire de la gélatine concentrée,
b) broyer du tissu adipeux animal, faire fondre la graisse et séparer les composants non dissous pour produire de la graisse liquide,
c) rincer du foie animal cru dans de l'eau froide, broyer et faire passer par un tamis pour séparer les composants solides pour produire du foie cru en purée,
d) mélanger
15-25 % en poids de gélatine concentrée,
30-50 % en poids de graisse liquide,
10-40 % en poids de foie cru en purée,
du sel de salaison à base de nitrite et/ou du sel de table
et des épices pour produire une masse de pâté de foie,
mettre en récipients et faire cuire la masse de pâté de foie.

2. Procédé selon la revendication 1, **caractérisé en ce que** le tissu animal contenant du collagène est de la peau, des tendons, des os, du cartilage et/ou des pieds.

3. Procédé selon l'une des revendications précédentes, **caractérisé en ce que** du sel de salaison à base de nitrite est ajouté au foie en purée.

4. Procédé selon l'une des revendications précédentes, **caractérisé en ce que** le broyage et la réduction du foie en purée se font par un tamis avec des ouvertures de 1 mm au maximum.

5. Procédé selon l'une des revendications précédentes, **caractérisé en ce qu'**on laisse le foie en purée rubéfier, après l'addition de sel de salaison à base de nitrite, à max. 5 °C pendant au moins 12 h.

6. Procédé selon l'une des revendications précédentes, **caractérisé en ce que** le foie est rincé pendant au moins 2 h dans de l'eau froide courante avant d'être broyé.

7. Procédé selon l'une des revendications précédentes, **caractérisé en ce que** la graisse animale fondue est tamisée par un tamis avec des mailles d'une taille de 1 mm au maximum pour séparer des composants non dissous.

8. Procédé selon l'une des revendications précédentes, **caractérisé en ce que** la graisse animale fondue est chauffée à une température à laquelle la protéine se dénature et de la protéine dénaturée est séparée avec les composants non dissous.

9. Procédé selon l'une des revendications précédentes, **caractérisé en ce que** le foie animal est du foie de volaille.

10. Procédé selon l'une des revendications précédentes, **caractérisé en ce que** la gélatine concentrée est d'abord homogénéisée avec la graisse liquide et ce mélange est ensuite mélangé avec le foie cru en purée.

11. Procédé selon l'une des revendications précédentes, **caractérisé en ce que** le tissu adipeux animal est de la graisse sous-cutanée, de la panne ou un mélange de celles-ci.

12. Procédé selon l'une des revendications précédentes, **caractérisé en ce que** le tissu adipeux animal, le tissu contenant du collagène et le foie proviennent exclusivement de volaille.

13. Procédé selon l'une des revendications précédentes, **caractérisé en ce que** la cuisson a lieu jusqu'à ce qu'une température à cœur d'au moins 58° C soit atteinte pendant au moins 10 min.

14. Procédé selon l'une des revendications précédentes, **caractérisé en ce qu'**il n'y a aucune addition d'épaississants, d'émulsifiants, de stabilisateurs, de graisses végétales et/ou d'exhausteurs de goût ou d'arômes ou de phosphates.

15. Pâté de foie, qui ne contient pas de foie gras et qui peut être obtenu selon un procédé selon l'une des revendications précédentes, qui est composé de 15-25 % en poids de gélatine aqueuse concentrée, de 30-50 % en poids de graisse, de 10-40 % en poids de foie cru en purée, de sel de salaison à base de nitrite et/ou de sel de table et d'épices, qui ne contient aucun épaississant, aucun émulsifiant, aucun stabilisateur, aucune graisse végétale et/ou aucun exhausteur de goût ou aucun arôme synthétique et qui est une masse homogène.

16. Pâté de foie selon la revendication 15, **caractérisé en ce que** la masse homogène est cuite.
